# EUROPEAN PATENT SPECIFICATION

(11) **EP 1 480 476 B1**
(45) Date of publication and mention of the grant of the patent: **29.10.2008**
(21) Application number: 03706644.6
(22) Date of filing: 12.02.2003
(51) Int. Cl.: H04Q 7/32, G07F 7/10, G07F 19/00

(54) **MOBILE TELEPHONE USER EQUIPMENT, A METHOD OF DISPLAYING INFORMATION CORRESPONDING TO DATA IN A MOBILE TELEPHONE USER EQUIPMENT AND A TRANSACTION SYSTEM**
MOBILTELEFONBENUTZERGERÄT, VERFAHREN ZUM ANZEIGEN VON DATEN-ENTSPRECHENDEN INFORMATIONEN IN EINEM MOBILTELEFONBENUTZERGERÄT UND TRANSAKTIONSSYSTEM
EQUIPEMENT UTILISATEUR DE TELEPHONIE MOBILE, PROCEDE DE PRESENTATION DES INFORMATIONS CORRESPONDANT A DES DONNEES DANS UN EQUIPEMENT UTILISATEUR DE TELEPHONIE MOBILE ET SYSTEME POUR TRANSACTIONS

(30) Priority: 25.02.2002 ES 200200457
(43) Date of publication of application: 24.11.2004
(73) Proprietor: Vodafone Group PLC, Newbury Berkshire RG14 2FN (GB)
(72) Inventor: BUSTILLO VELASCO, Jaime, E-28109 Alcobendas (ES); PORTASANY SANCHEZ, Carlos, E-28017 Madrid (ES)
(74) Representative: Carvajal y Urquijo, Isabel
(86) International application number: PCT/ES2003/000076
(87) International publication number: WO 2003/071822

(56) References cited:
- EP-A2- 1 231 578
- WO-A1-02/15121
- US-A1- 2002 004 374
- PATENT ABSTRACTS OF JAPAN & JP 2001 209741 A (NIPPON SHINPAN CO LTD) 03 August 2001

## Description

### FIELD OF THE INVENTION

The invention is applicable in the mobile telephony field. As is known, in said field, English acronyms and terms are normally used for referring to elements and concepts of the field. To facilitate the reading of this specification for a reader who is not an skilled person in the art, a list of the acronyms used herein is detailed below:
- GSM: Global System for Mobile Communication
- ICC: Integrated Circuit Card (Chip Card)
- SIM: Subscriber Identity Module
- SAT: SIM Application Toolkit
- SM: Short Message
- UMTS: Universal Mobile Telecommunications System (also called "Third Generation Mobile Telephony")
- UICC: UMTS Integrated Circuit Card
- USIM: Universal Subscriber Identity Module
- USAT: USIM Application Toolkit (SAT in the case of UMTS)
- USSD: Unstructured Supplementary Service Data

### BACKGROUND OF THE INVENTION

There are currently different types of mobile telephones (also called "cellular" or " portable" phones), which are normally provided with a keyboard and a display with capacity to show alphanumerical symbols and, in many cases, graphics as well.

There are currently different mobile telephony systems, among them the GSM and UMTS system (also called "Third Generation Mobile Telephony").

The subscriber equipment, in both the GSM system and in the UMTS system, comprises:
a) on one hand, a terminal (which is what is many times called a "mobile telephone") (which includes a casing, display, keyboard, power source and different circuits), and
b) on the other hand, an ICC or UICC (UMTS Integrated Circuit Card) card. In the case of GSM, it is an ICC card called SIM card or simply SIM (Subscriber Identity Module), or a UICC with a SIM application, and in the case of UMTS, it is a UICC with a USIM application. Both the SIM card and the UICC card (with one or several SIM and/or USIM applications) contain a set of files with data of the mobile telephony network operator and subscriber, and are provided with means for carrying out operations associated with a series of commands which permit the terminal to access those files (to read them, write them, select them, verify subscriber keys, etc.). Data authenticating the subscriber to the network are among those subscriber data.

Until UMTS (called Third Generation Mobile Telephony) emerged, normally no distinction was made between the physical interface of the application (depending on the nature of the ICC smart card) and the application itself: both were called SIM. Third Generation Mobile Telephony (UMTS) introduced the separation between the physical interface and applications. The physical interface is called UICC; it is a platform where several applications can simultaneously coexist; among them there could be SIM and/or USIM applications. The subscriber identification application itself is called USIM in UMTS.

It is considered that a smart card is a physically secure device, that is, it is a device in which stored data are protected against attacks by third parties trying to read them, modify them, delete them or falsify them without permission of the owner of the information.

Below, we refer to the subscriber identification module as SIM for both GSM and UMTS (i.e., with SIM, we also refer to a UICC with corresponding SIM or USIM applications).

In the field of mobile telephony, the concept of SAT=SIM Application Toolkit (in UMTS, USAT=USIM Application Toolkit) is known, which consists of a set of tools for SIM applications; below, we refer to an application based on said tools as a "Toolkit Application".

At first, mobile terminals were only capable of sending commands to the SIMs, whereas the SIMs were only capable of responding to commands received from the mobile terminal.

Subsequently, an evolution occurred in mobile terminals and in SIM cards and on one hand, the terminals are permitted to send commands to the SIM card as well as to receive commands therefrom, and on the other hand the SIM card is permitted to respond to commands received from the mobile terminal as well as to send commands thereto. These commands permit the SIM, for example, to request the terminal to send a short message (SM), make a call, show a list of options to the subscriber, request a datum from it, etc.

Applications existing in the SIM card capable of sending commands to the mobile terminal are known with the name SAT (SIM Application Toolkit) Applications. In UMTS, they are known with the name USAT (USIM Application Toolkit) Applications. Both are generally called Toolkit applications.

Toolkit applications are optional features of SIM cards as well as UICC cards (with the corresponding applications). High level procedures, command content and encoding, are specified in standard GSM11.14 for GSM and in standard 3GPP TS 31.111 for UMTS.

Systems are being developed in mobile telephony such as payment systems, which require subscriber identification. An example of this type of system is disclosed in European patent application EP-A-1136961. Currently, in some known systems such as, for example, in Movilbuy®, subscriber identification is based on the verification of his/her telephone number. One way of verifying said number is based on the subscriber making a call or sending a short message to the entity that should verify the number.

There are also other situations in which it may be suitable to transmit some type of datum from the subscriber terminal or card to a terminal, server or the like. The transmission can be carried out by means of a call or by means of sending a short message (SM) or a USSD.

At times, this way of communicating a datum is not practical for different reasons (comfort, economy, etc.). For example, in a payment system through a mobile, it is necessary for the client to authenticate himself/herself to the vendor or sales system. In this case, if the telephone number is facilitated as identification, the subscriber's privacy is being violated, and this can make the service rather unattractive.

One known solution to the drawback of subscriber identification in a payment transaction involving the subscriber equipment (terminal + card) is based on making the data necessary for identification (for example, telephone number or a service subscriber code, for example, the electronic transaction system client code) accessible for optical reading, directly on the terminal. This is achieved by adhering a label (for example, in sticker form) with a bar (or dot) code on the terminal itself; the bar code corresponds to the data necessary for identification (for example, the bar code can correspond to the subscriber mobile telephone number or service subscriber code). However, this solution has a series of limitations:
- The label can become worn, erased and/or no longer adhered to the terminal.
- If the subscriber changes his/her SIM (or UICC) card to another terminal, he/she must change the label as well. For example, in GSM and UMTS, the subscriber telephone number is associated with a card or SIM and does not at all depend on the terminal used. Therefore, if a subscriber has the label with the telephone number or subscriber code (in bar code form) adhered to the terminal and then changes the SIM card to another terminal, the subscriber will have to also change the label to the new terminal. Furthermore, in a terminal bearing a label with the telephone number or SIM card subscriber number, if said card is exchanged for another one (for example, of another subscriber), the telephone number or subscriber code on the label of the terminal will no longer correspond to the telephone number of the new SIM card.
- The codes can be easily read by third parties, which represents a lack of security; therefore, the system may not be very secure for the case of payment applications.

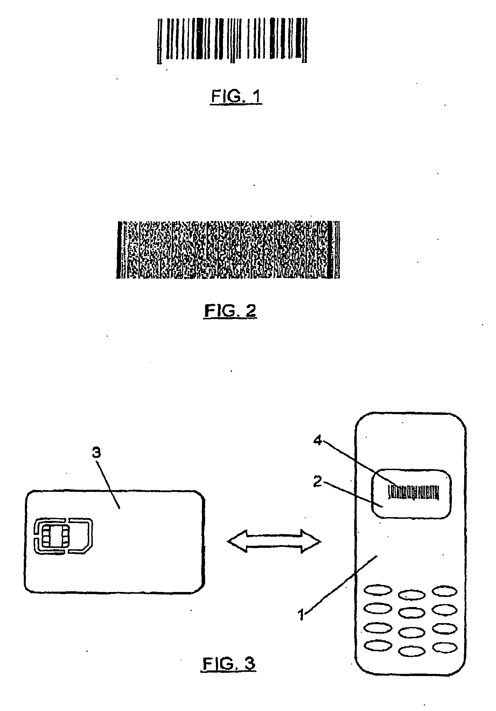

Bar codes (also called 1 D codes) are generally used, for example, for product identification, etc. There are different types of encoding for bar codes (1 D codes), but all of them are based on the same concept: alphanumerical characters are encoded in some type of binary code and are represented by means of bars. Figure 1 shows a bar code example.

Bar codes are read by means of specific readers which, using optical methods (usually a laser), recognize these codes and transmit them to a processing system, normally a computer. The most typical examples of bar codes are on supermarket product labels. There are many types of encoding with bar codes; examples of 1 D code types are: ADD-2; Add-5; Airline 2 of 5; BCD Matrix; Code 2 of 5; Code 32; Code 93; Code 128; Code 39; CODABAR; Data Logic 2 of 5; EAN 128; EAN-13; EAN-8; Invert 2 of 5; Matrix 2 of 5; Patch Code; UCC128; UPC-E; and UPC-UN.

There are also "dot codes" or "2D codes", which can be considered an evolution of bar codes (1D codes). In dot codes, the characters are represented as a set of dots; a dot code example is shown in figure 2.

Dot codes (2D codes) can be read by a camera at any angle, which accelerates the scanning of the codes. One of the most used 2D encoding types is PDF.

US patent US-A-5,642,103 discloses a transponder (transmitter-receiver) with an LCD display where a bar code can be displayed.

Below, we will refer to dot codes, bar codes and analogous codes that may exist with the general term "graphic code".

US-A-2002/0004374, JP-A-20011209741 and WO-A-02/15121 disclose apparatuses and/or methods substantially in accordance with the preambles of claims 1 and 13.

These documents disclose the concept of displaying on the display of the mobile telephony subscriber equipment an optically readable graphic code representative of the data necessary for identification of the subscriber in an electronic transaction involving the subscriber equipment. This solves problems posed by the prior use e.g. of labels in the form of a sticker with a bar or dot code that were attached to the subscriber terminals (becoming worn, erased and/or no longer adhered to the terminal, and lacking security, as the codes could be read by third parties). However, a further problem (that was already present in the case of using labels) arises in the case of the subscriber identity being associated with a card or Subscriber Identity Module SIM, rather than with the terminal used, e.g. if a subscriber changes the SIM card to another terminal.

Document EP-A2-1 231 578 (representing prior art falling under Article 54(3) EPC) also generates a graphic code displayed on the display of the mobile telephony subscriber equipment from subscriber identification data inherent to the Subscriber Identity Module on a card. However, this is done by additional encrypting and converting devices external to the SIM card.

### DESCRIPTION OF THE INVENTION

The invention refers to a mobile telephony subscriber equipment according to claim 1, to a method according to claim 13, and to a system according to claim 24. Preferred embodiments of the invention are defined in the dependent claims.

The subscriber equipment comprises a terminal with, at least, one display. The equipment comprises means for displaying a graphic code on the display. The graphic code could be, for example, a bar code or dot code.

According to the invention, the means for displaying a graphic code on the display comprise means for executing an application on a card associated with a subscriber, namely, on a card comprising a Subscriber Identity Module or equivalent. If it is a subscriber equipment (terminal + card) for the GSM system, the card is preferably a SIM card (or a UICC with at least one SIM application), and if it is subscriber equipment (terminal + card) for the UTMS system, the card is preferably a UICC with a USIM (or more). In such case, the application is preferably a SAT or USAT application, respectively.

The terminal should be suitable for displaying graphic codes on the display; preferably, the terminal supports SAT and/or USAT and has a display with enough definition which supports icons. For example, both Alcatel® and Siemens® market suitable terminals (for example, Siemens S-25 model) and there are more and more terminals appearing which have said features. The display is conventionally a liquid crystal display (LCD) comprising a dot matrix.

The graphic code represents data associated with the subscriber identity, for example, the subscriber telephone number, a subscriber code, etc.

The means for displaying the graphic code on the display can comprise:
generation means of the graphic code as from data stored in a memory (for example, in the SIM card memory) or introduced through the terminal keyboard, and/or means for storing the graphic code in a memory (for example, in the SIM card memory); and
means for showing the generated and/or stored graphic code on the display.

For example, a binary sequence is generated from the datum (for example, telephone number) according to suitable encoding (for example, EAN-13 encoding), and the bar code is established from said binary sequence, such that each binary sequence bit is associated with a series of pixels. Specifically, each bit can be associated with a series of pixels forming an elongated and narrow rectangle, such that said pixels become dark (thereby representing a bar) or not dark (thereby representing a blank space between adjacent rectangles) according to the corresponding bit value. Any average person skilled in the art is familiar with these procedures, further explanation is therefore not required.

The Toolkit application controlling the bar (or dot) code display may, depending on the requirements of the service in question, show a code it has stored or generate it from a datum and subsequently show it.

Therefore, in the ICC card (normally, a SIM or UICC card with, at least, one SIM and/or USIM application), the bar code is generated and/or stored, and the application (normally, the Toolkit application) is responsible for requesting the terminal to show or expose the code on the display. Any average person skilled in the art and familiar with the Toolkit applications knows that icons can be shown (this is explained more in detail in GSM 11.14 and 3GPP TS 31.111 specifications) and that the application can create an icon with the desired drawing; therefore, further explanations to the respect are not considered necessary.

Preferably, the means for displaying the graphic code on the display comprise means for displaying the graphic code on the display as a response to a code display request (for example, as a response to an order given by the subscriber through a terminal key board).

The means for presenting the graphic code on the display can comprise proactive commands which support icons. Proactive commands (SAT and/or USAT commands) which permit showing these types of codes are all those which support icons. These commands permit showing a text or icon, or both, on the display at some time during their execution. Some of the most used of these commands are: DISPLAY TEXT (shows a text on the display); GET INKEY (requests the subscriber to introduce a character); GET INPUT (requests the subscriber to introduce a datum); SET-UP MENU (inserts the card application main menu in the terminal menu); SELECT ITEM (shows a list of options to the subscriber); SEND SHORT MESSAGE (sends a short message); SEND SS (sends a supplementary service); SEND USSD (sends a USSD); SET-UP CALL (makes a call); SET-UP IDLE MODE TEXT (shows a text when the display is in idle mode).

There are commands which permit showing a text or icon or both, and which can be used for showing an icon containing a graphic code, for example, a bar or dot code.

Furthermore, in future SAT and/or USAT versions, new management commands of icons or of another type of images can appear which permit showing these different code forms.

The invention also refers to a method for displaying information corresponding to data in subscriber equipment which comprises a terminal with, at least, one display. The method comprises the step of displaying an optically readable graphic code corresponding to said data on the display. The graphic code can be a bar or dot code.

The step of displaying a graphic code on the display is carried out by means of an application on a card associated with a subscriber and comprising a Subscriber Identification Module, preferably a SIM or UICC card (with, at least, one SIM or USIM application). The application is preferably a SAT or USAT application.

The graphic code represents data associated with the subscriber identity, for example, the subscriber telephone number.

The method preferably comprises the steps of:
- generating the graphic code as from data stored in a memory and/or introduced through the terminal keyboard, and/or storing the graphic code in a memory; and
- showing the generated and/or stored graphic code on the display.

It can also comprise a step consisting of requesting the display of a graphic code on the display corresponding to, at least, one subscriber-associated datum.

The step of showing the code on the display includes the sending of, at least, one proactive command which supports icons, according to that which was commented above.

The invention can be of use for a service requiring the subscriber to communicate a datum which may be represented in graphic code (bar or dot code) form, for example, for the payment service mentioned above. For example, if the payment service requires the subscriber to identify himself/herself with his/her telephone number or with a subscriber code, the subscriber can request the subscriber equipment to display on the display thereof a bar or dot code representing his/her telephone number or subscriber code; said bar or dot code can be read with a conventional optical method with an optical reading device.

According to the invention and because cards such as the ICC cards mentioned above can be considered physically secure devices which permit storing subscriber data with different security access levels depending on the requirements, the invention solves, for example, the drawbacks of stickers adhered to the terminal:
- The graphic code (for example bar or dot code) does not wear, nor does it deteriorate in any way.
- Since they are codes which are resident of or generated in the card itself, they are related to the subscriber data (telephone number, keys, etc.), therefore the subscriber can change terminal with no problem.
- If the service to be implemented should so require, the code can be protected by the subscriber PIN or any other key of the card, making it inaccessible to third parties.

The manner in which the alphanumerical information which must be shown in graphic code (bar or dot code) form is collected, stored and processed will depend on the application being implemented at all times.

The invention also refers to a system for transactions comprising data processing means, at least one graphic code reader device and at least one subscriber equipment (terminal + card) of the type described above. In this system, data (for example, the subscriber telephone number, etc.) can be obtained by reading a graphic code (for example, a bar or dot code) appearing on the display of a subscriber equipment, for example, that of a purchaser. The rest of the system can be configured just like a conventional electronic transaction system based on the use of a subscriber equipment (terminal + card).

### BRIEF DESCRIPTION OF THE DRAWINGS

Below, a series of drawings are very briefly explained which help to better understand the invention and which are expressly related to embodiments of said invention, which are presented as illustrative and non-limiting examples thereof.
Figure 1 shows a bar code example.
Figure 2 shoes a dot code example.
Figure 3 shows a schematic view of a subscriber equipment including a terminal (or mobile telephone) and a card according to a preferred embodiment of the invention.
Figure 4 shows a schematic view of the "physical" distribution of some of the means forming part of a preferred embodiment of the invention.
Figure 5 shows a schematic view of the "physical" distribution of some of the means forming part of another preferred embodiment of the invention.
Figure 6 shows a flow chart representing a series of operations according to a possible application of the invention.
Figure 7 shows a schematic view of the process occurring in an ICC card according to a preferred embodiment of the invention.

### DESCRIPTION OF PREFERRED EMBODIMENTS OF THE INVENTION

Figure 3 schematically shows a preferred embodiment of the invention in which a subscriber equipment can be seen comprising a terminal (or mobile telephone) (1) with a display (2) and an ICC (or UICC) card (3) on which a SIM (or USIM) application and SIM (or USIM) applications Toolkit, i.e. SAT (or USAT), are loaded. A graphic code (4) is shown on the display, in this case, a bar code. For greater simplicity, below we only make reference to the modality corresponding to the GSM system, but the preferred embodiments will be directly applicable to UMTS.

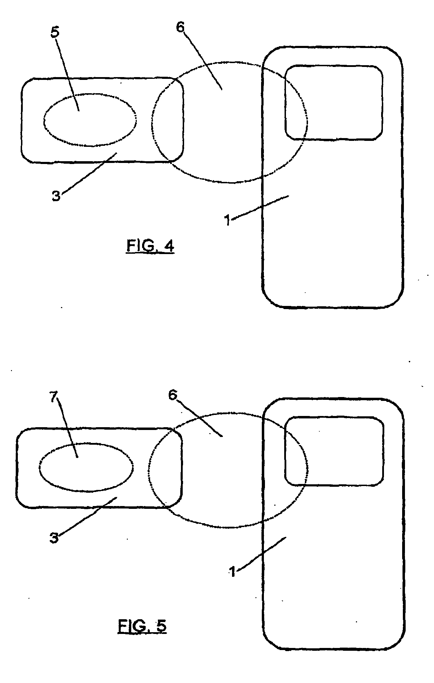

Figure 4 schematically shows the "physical" distribution of some of the means forming part of a preferred embodiment of the invention. In said embodiment, it can be seen how the generation means (5) of the graphic code (4) are associated with the ICC card (3); specifically, said means comprise a Toolkit application. However, the means for showing (6) the graphic code on the display partly correspond to the card (3) (specifically, a part of said means comprise the corresponding Toolkit application, including the part of said application responsible for generating and sending the suitable proactive command to the terminal), and in part, the terminal (1) (for example, the drivers of the display (2) form part of the terminal (1) and not of the card (3)).

Figure 5 schematically shows the "physical" distribution of some of the means forming part of another preferred alternative embodiment of the invention. Instead of the generation means (5) of the graphic code, means for storing (7) the graphic code in a memory of the card (3) are provided. Said means are associated with the ICC card (3).

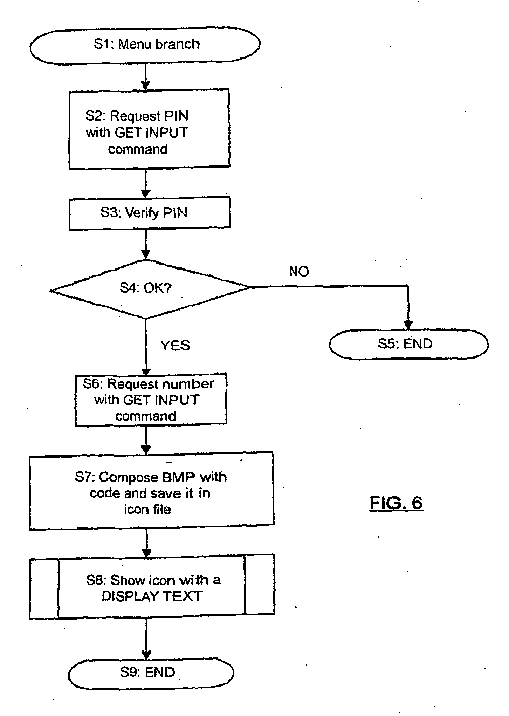

By means of a flow chart, figure 6 shows a series of steps according to a possible embodiment of the invention. Below, the different steps carried out in said embodiment will be discussed:
S1: "Menu branch": in the menu, the subscriber indicates that he/she wants to display the graphic code (4), for example, the bar code corresponding to his/her telephone number, subscriber code, etc. on the display (2). The Toolkit application is triggered by means of an ENVELOPE command sent by the terminal (in this example, the ENVELOPE command is of the MENU SELECTION type).
S2: "Request PIN with a GET INPUT command": the Toolkit application begins running and requests a PIN (a key) from the subscriber using the GET INPUT command. The subscriber types his/her PIN on the terminal keyboard.
S3: "Verify PIN": the Toolkit application checks if the typed PIN is correct.
S4: "OK?": If the PIN is correct, it proceeds to step S6. If it is incorrect, it proceeds to step S5.
S5: "END": The session is concluded since the PIN introduced by the subscriber was incorrect.
S6: "Request number with GET INPUT command": the Toolkit application asks the subscriber for the number which he/she wants to put in bar code format, using the GET INPUT command. The number requested can be the subscriber telephone number or another type of datum or code, for example, a code identifying the subscriber as a client in an electronic transaction system. The subscriber types said number on the keyboard (in an alternative embodiment, the application can obtain the number or code directly from the memory of the SIM card or UICC card with the corresponding application-, i.e., in said alternative embodiment, the number or code is already stored in the card and it is not necessary to type it).
S7: "Compose a BMP with the code and save it in the icon file": starting from the obtained data, for example, the subscriber telephone number or the subscriber code, the Toolkit application composes the corresponding graphic code, in the Bit-map format required by icons manageable with SAT or USAT applications (according to GSM 11.14 and 3GPP TS 31.111 specifications, respectively). This file is saved in an icon file in the ICC card (3); this operation involves the generation means (5) as well as the means for storing (7) the graphic code.
S8: "Show the icon with a DISPLAY TEXT": with the means of showing (6) the graphic code on the screen, with the proactive "DISPLAY TEXT" command, the Toolkit application acts on the terminal and on the terminal display drivers, thereby showing the graphic code (4) on the display (2) (and which can be read with the corresponding optical reader).
S9: "END": the session ends.

The card (3) can be an Oberthur Card Systems Java Card 2.1, and a suitable terminal could be a Siemens S-25 terminal.

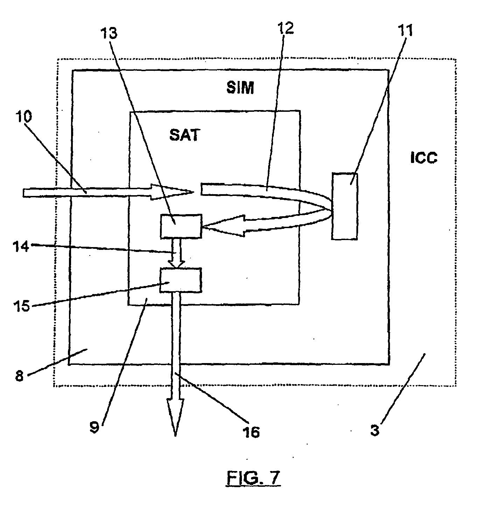

Figure 7 schematically shows the ICC card (3) where the SIM application (8) is loaded (therefore, the card is normally called "SIM card"), and with it, the Toolkit application, in this case, a SAT application (9). As schematically shown in figure 7, the SAT application (9) receives a command (10) requesting the display of a graphic code (4), for example, a bar code corresponding to a datum or data related to the subscriber, i.e., to the holder of the ICC card (3), on the display (2). Said datum can be the subscriber telephone number, a subscriber code, etc. In this preferred embodiment, the datum is stored in the memory of the ICC card, schematically shown with reference number (11).

The SAT application recovers (12) the datum from the memory (11) and passes it to a generation module (13) of a graphic code as from the datum. This graphic code generation module (13) can consist of any program conventionally used for generating a graphic code, for example, a bar or dot code, as from a numerical (for example, a telephone number) or alphanumerical datum. The generated graphic code is sent (14) to a graphic code display module (15) on the display, which comprises sending (16) a suitable command to the terminal (1). It can be a proactive command (SAT command) which supports icons, for example, DISPLAY TEXT.

The modules mentioned above do not correspond to physical entities of the ICC card, but rather to software modules of a SAT application, and figure 7 only tries to schematically show how the invention can be carried out in the GSM environment.

The invention can be integrated in the architecture of the service or application requiring it. Logically, the invention should not be interpreted as limited to the GSM or UMTS systems, but rather can be applied within the scope of the claims to any system which permits incorporating the means and steps necessary for the invention.

Throughout the present description and claims, the word "comprises" and variations thereof, such as "comprising", do not intend to exclude other steps or components.

## Claims

1. A mobile telephony subscriber equipment comprising:
a terminal (1) with, at least, one display (2);
the subscriber equipment further comprising means for displaying an optically readable graphic code (4) on the display, said graphic code being representative of data associated with a subscriber identity necessary for identification in an electronic transaction involving the subscriber equipment;
**characterized in that**
the means for displaying an optically readable graphic code on the display comprise means for executing an application on a card comprising a Subscriber Identity Module to generate the graphic code from the data associated with the subscriber identity.

2. A subscriber equipment according to claim 1, **characterized in that** the graphic code (4) is a bar code.

3. A subscriber equipment according to claim 1, **characterized in that** the graphic code (4) is a dot code.

4. A subscriber equipment according to any of the preceding claims, **characterized in that** the card (3) is a SIM or UICC card with, at least, one SIM and/or USIM application stored therein.

5. A subscriber equipment according to claim 4, **characterized in that** the application is a SAT or USAT application.

6. A subscriber equipment according to any of the preceding claims, **characterized in that** the display (2) is a liquid crystal display comprising a dot matrix.

7. A subscriber equipment according to any of the preceding claims, **characterized in that** the data associated with a subscriber identity comprise the subscriber telephone number.

8. A subscriber equipment according to any of the preceding claims, **characterized in that** the means for displaying the graphic code on the display comprise:
- generation means (5) of the graphic code (4) as from data stored in a memory (11); and
- means for showing (6) the generated graphic code on the display (2).

9. A subscriber equipment according to any of claims 1-7, **characterized in that** the means for displaying the graphic code on the display comprise:
- generation means (5) of the graphic code (4) as from data introduced through a keyboard of the terminal (1); and
- means for showing (6) the generated graphic code on the display (2).

10. A subscriber equipment according to any of the preceding claims, **characterized in that** the means for displaying the graphic code on the display comprise:
- means for storing (7) the graphic code in a memory; and
- means for showing (6) the graphic code on the display (2).

11. A subscriber equipment according to any of the preceding claims, **characterized in that** the means for displaying the graphic code on the display comprise means for displaying the graphic code on the display in response to a code display request.

12. A subscriber equipment according to any of the preceding claims, **characterized in that** the means for displaying the graphic code on the display comprise means for executing proactive commands that support icons.

13. A method for displaying information corresponding to data on a mobile telephony subscriber equipment comprising a terminal (1) with, at least, one display (2),
wherein
the method comprises the step of displaying an optically readable graphic code (4) on the display (2), said optically readable graphic code being representative of data associated with a subscriber identity necessary for identification in an electronic transaction involving the subscriber equipment;
**characterized in that.**
the method further comprises the step of executing an application on a card comprising a Subscriber Identity Module to generate the graphic code from the data associated with the subscriber identity.

14. A method according to claim 13, **characterized in that** the graphic code (4) is a bar code.

15. A method according to claim 13, **characterized in that** the graphic code (4) is a dot code.

16. A method according to any of claims 13-15, **characterized in that** the card (3) is a SIM or UICC card with, at least, one SIM and/or USIM application.

17. A method according to claim 16, **characterized in that** the application is a SAT or USAT application.

18. A method according to any of claims 13-17, **characterized in that** the data associated with a subscriber identity comprise the subscriber telephone number.

19. A method according to any of claims 13-18, **characterized in that** it comprises the steps of:
- generating the graphic code as from data stored in a memory; and
- showing the generated graphic code on the display.

20. A method according to any of claims 13-18, **characterized in that** it comprises the steps of:
- generating the graphic code as from data introduced through a terminal keyboard; and
- showing the generated graphic code on the display.

21. A method according to any of claims 13-20, **characterized in that** it comprises the steps of:
- storing the graphic code in a memory; and
- showing the graphic code on the display.

22. A method according to any of claims 13-21, **characterized in that** it additionally comprises the first step of:
- requesting a graphic code corresponding to, at least, one datum associated to a subscriber to be displayed.

23. A method according to any of claims 13-22, **characterized in that** the step of showing the code on the display includes the sending of, at least, one proactive command which supports icons.

24. A system for transactions comprising data processing means, at least one graphic code reading device for optically reading a graphic code and at least one mobile telephony subscriber equipment, **characterized in that** the subscriber equipment is a subscriber equipment according to any of claims 1-12.

## Patentansprüche

1. Mobilfunkteilnehmeranlage, welche umfasst:
ein Endgerät (1) mit zumindest einer Anzeige (2);
wobei die Teilnehmeranlage zudem Mittel zum Anzeigen eines optisch lesbaren Grafikcodes (4) auf der Anzeige umfasst, wobei der genannte Grafikcode für Daten repräsentativ ist, die mit einer Teilnehmeridentität verbunden sind, die zur Identifikation in einer die Teilnehmeranlage beinhaltenden elektronischen Transaktion notwendig ist;
**dadurch gekennzeichnet, dass** die Mittel zum Anzeigen eines optisch lesbaren Grafikcodes auf der Anzeige Mittel zum Ausführen einer Anwendung auf einer Karte umfasst, die ein Teilnehmeridentifikationsmodul umfasst, um den Grafikcode aus den Daten zu erzeugen, die mit der Teilnehmeridentität verbunden sind.

2. Teilnehmeranlage nach Anspruch 1, **dadurch gekennzeichnet, dass** der Grafikcode (4) ein Strichcode ist.

3. Teilnehmeranlage nach Anspruch 1, **dadurch gekennzeichnet, dass** der Grafikcode (4) ein Dotcode ist.

4. Teilnehmeranlage nach einem der vorherigen Ansprüchen, **dadurch gekennzeichnet, dass** die Karte (3) eine SIM- oder UICC-Karte ist, mit zumindest einer darin gespeicherten SIM- und/oder USIM-Anwendung.

5. Teilnehmeranlage nach Anspruch 4, **dadurch gekennzeichnet, dass** die Anwendung eine SAT- oder USAT-Anwendung ist.

6. Teilnehmeranlage nach einem der vorherigen Ansprüche, **dadurch gekennzeichnet, dass** die Anzeige (2) eine Flüssigkristallanzeige ist, die eine Punktmatrix umfasst.

7. Teilnehmeranlage nach einem der vorherigen Ansprüche, **dadurch gekennzeichnet, dass** die Daten, die mit einer Teilnehmeridentität verbunden sind, die Teilnehmertelefonnummer umfassen.

8. Teilnehmeranlage nach einer der vorherigen Ansprüche, **dadurch gekennzeichnet, dass** die Mittel zum Anzeigen des Grafikcodes auf der Anzeige umfassen:
- Erzeugungsmittel (5) des Grafikcodes (4) aus in einem Speicher (11) gespeicherten Daten; und
- Mittel (6) zum Zeigen des erzeugten Grafikcodes auf der Anzeige (2).

9. Teilnehmeranlage nach einem der Ansprüche 1 bis 7, **dadurch gekennzeichnet, dass** die Mittel zum Anzeigen des Grafikcodes auf der Anzeige umfassen:
- Erzeugungsmittel (5) des Grafikcodes (4) aus durch eine Endgerättastatur (1) eingegebenen Daten; und
- Mittel (6) zum Zeigen des erzeugten Grafikcodes auf der Anzeige (2).

10. Teilnehmeranlage nach einem der vorherigen Ansprüche, **dadurch gekennzeichnet, dass** die Mittel zum Anzeigen des Grafikcodes auf der Anzeige umfassen:
- Mittel (7) zum Speichern des Grafikcodes in einem Speicher; und
- Mittel (6) zum Zeigen des Grafikcodes auf der Anzeige (2).

11. Teilnehmeranlage nach einem der vorherigen Ansprüche, **dadurch gekennzeichnet, dass** die Mittel zum Anzeigen des Grafikcodes auf der Anzeige Mittel zum Anzeigen des Grafikcodes auf der Anzeige als Beantwortung einer Codeanzeigeanfrage umfassen.

12. Teilnehmeranlage nach einem der vorherigen Ansprüche, **dadurch gekennzeichnet, dass** die Mittel zum Anzeigen des Grafikcodes auf der Anzeige Mittel zum Ausführen proaktiver Befehle umfassen, welche lcons unterstützen.

13. Verfahren zum Anzeigen von Informationen, die Daten auf einer Mobilfunkteilnehmeranlage entsprechen, welche ein Endgerät (1) mit zumindest einer Anzeige (2) umfasst,
wobei das Verfahren den Schritt zum Anzeigen eines optisch lesbaren Grafikcodes (4) auf der Anzeige (2) umfasst, wobei der genannte optisch lesbare Grafikcode für Daten repräsentativ ist, die mit einer Teilnehmeridentität verbunden sind, die zur Identifikation in einer die Teilnehmergerät beinhaltenden elektronischen Transaktion notwendig ist;
**dadurch gekennzeichnet, dass** das Verfahren zudem den Schritt zum Ausführen einer Anwendung auf einer Karte umfasst, die ein Teilnehmeridentitätsmodul umfasst, um den Grafikcode aus den Daten zu erzeugen, die mit der Teilnehmeridentität verbunden sind.

14. Verfahren nach Anspruch 13, **dadurch gekennzeichnet, dass** der Grafikcode (4) ein Strichcode ist.

15. Verfahren nach Anspruch 13, **dadurch gekennzeichnet, dass** der Grafikcode (4) ein Dotcode ist.

16. Verfahren nach einem der Ansprüche 13 bis 15, **dadurch gekennzeichnet, dass** die Karte (3) eine SIM- oder UICC-Karte ist mit zumindest einer SIM- oder USIM-Anwendung.

17. Verfahren nach Anspruch 16, **dadurch gekennzeichnet, dass** die Anwendung eine SAT- oder USAT-Anwendung ist.

18. Verfahren nach einem der Ansprüche 13 bis 17, **dadurch gekennzeichnet, dass** die mit einer Teilnehmeridentität verbundenen Daten die Teilnehmertelefonnummer umfassen.

19. Verfahren nach einem der Ansprüche 13 bis 18, **dadurch gekennzeichnet, dass** es folgende Schritte umfasst:
- Erzeugen des Grafikcodes aus in einem Speicher gespeicherten Daten; und
- Zeigen des erzeugten Grafikcodes auf der Anzeige.

20. Verfahren nach einem der Ansprüche 13 bis 18, **dadurch gekennzeichnet, dass** es folgende Schritte umfasst:
- Erzeugen des Grafikcodes aus durch eine Endgerättastatur eingegebenen Daten; und
- Zeigen des erzeugten Grafikcodes auf der Anzeige.

21. Verfahren nach einem der Ansprüche 13 bis 20, **dadurch gekennzeichnet, dass** folgende Schritte umfasst:
- Speichern des Grafikcodes in einem Speicher; und
- Zeigen des Grafikcodes auf der Anzeige.

22. Verfahren nach einem der Ansprüche 13 bis 21, **dadurch gekennzeichnet, dass** es zusätzlich den ersten Schritt umfasst:
- Anfordern einer Anzeige eines Grafikcodes, der zumindest einem Datenelement entspricht, die mit einem Teilnehmer verbunden ist.

23. Verfahren nach einem der Ansprüche 13 bis 22, **dadurch gekennzeichnet, dass** der Schritt zum Zeigen des Codes auf der Anzeige das Senden von zumindest einem proaktiven Befehl enthält, welcher lcons unterstützt.

24. System für Transaktionen, welches Datenverarbeitungsmittel umfasst, zumindest eine Grafikcodelesevorrichtung zum optischen Lesen eines Grafikcodes und zumindest eine Mobilfunkteilnehmeranlage, **dadurch gekennzeichnet, dass** die Teilnehmeranlage eine Teilnehmeranlage nach einem der Ansprüche 1 bis 12 ist.

## Revendications

1. Équipement d'abonné de téléphonie mobile comprenant :
un terminal (1) avec, au moins, un afficheur (2) ;
l'équipement d'abonné comprenant, en outre, des moyens pour afficher un code graphique optiquement lisible (4) sur l'afficheur, ledit code graphique étant représentatif de données associées à une identité d'abonné nécessaire pour l'identification dans une transaction électronique impliquant l'équipement d'abonné ;
**caractérisé en ce que**
les moyens pour afficher un code graphique optiquement lisible sur l'afficheur comprennent des moyens pour exécuter une application sur une carte comprenant un Module d'Identité d'Abonné pour générer le code graphique à partir des données associées à l'identité d'abonné.

2. Équipement d'abonné selon la revendication 1, **caractérisé en ce que** le code graphique (4) est un code à barres.

3. Équipement d'abonné selon la revendication 1, **caractérisé en ce que** le code graphique (4) est un code à points.

4. Équipement d'abonné selon l'une quelconque des revendications précédentes, **caractérisé en ce que** la carte (3) est une carte SIM ou UICC avec, au moins, une application SIM ou/et USIM stockée en son sein.

5. Équipement d'abonné selon la revendication 4, **caractérisé en ce que** l'application est une application SAT ou USAT.

6. Équipement d'abonné selon l'une quelconque des revendications précédentes, **caractérisé en ce que** l'afficheur (2) est un afficheur à cristaux liquides comprenant une matrice de points.

7. Équipement d'abonné selon l'une quelconque des revendications précédentes, **caractérisé en ce que** les données associées à une identité d'abonné comprennent le numéro de téléphone d'abonné.

8. Équipement d'abonné selon l'une quelconque des revendications précédentes, **caractérisé en ce que** les moyens pour afficher le code graphique sur l'afficheur comprennent :
- des moyens de génération (5) du code graphique (4) à partir des données stockées dans une mémoire (11) ; et
- des moyens pour montrer (6) le code graphique généré sur l'afficheur (2).

9. Équipement d'abonné selon l'une quelconque des revendications 1-7, **caractérisé en ce que** les moyens pour afficher le code graphique sur l'afficheur comprennent :
- des moyens de génération (5) du code graphique (4) à partir des données introduites à travers un clavier du terminal (1) ; et
- des moyens pour montrer (6) le code graphique généré sur l'afficheur (2).

10. Équipement d'abonné selon l'une quelconque des revendications précédentes, **caractérisé en ce que** les moyens pour afficher le code graphique sur l'afficheur comprennent :
- des moyens pour stocker (7) le code graphique dans une mémoire ; et
- des moyens pour montrer (6) le code graphique sur l'afficheur (2).

11. Équipement d'abonné selon l'une quelconque des revendications précédentes, **caractérisé en ce que** les moyens pour afficher le code graphique sur l'afficheur comprennent des moyens pour afficher le code graphique sur l'afficheur en réponse à une demande d'affichage du code.

12. Équipement d'abonné selon l'une quelconque des revendications précédentes, **caractérisé en ce que** les moyens pour afficher le code graphique sur l'afficheur comprennent des moyens pour exécuter des commandes proactives qui supportent des icônes

13. Procédé pour afficher de l'information correspondant à des données sur un équipement d'abonné de téléphonie mobile comprenant un terminal (1) avec, au moins, un afficheur (2) ;
dans lequel
le procédé comprend l'étape d'afficher un code graphique optiquement lisible (4) sur l'afficheur, ledit code graphique étant représentatif de données associées à une identité d'abonné nécessaire pour l'identification dans une transaction électronique impliquant l'équipement d'abonné ;
**caractérisé en ce que**
le procédé comprend, en outre, l'étape d'exécuter une application sur une carte comprenant un Module d'Identité d'Abonné pour générer le code graphique à partir des données associées à l'identité d'abonné.

14. Procédé selon la revendication 13, **caractérisé en ce que** le code graphique (4) est un code à barres.

15. Procédé selon la revendication 13, **caractérisé en ce que** le code graphique (4) est un code à points.

16. Procédé selon l'une quelconque des revendications 13-15, **caractérisé en ce que** la carte (3) est une carte SIM ou UICC avec; au moins, une application SIM ou/et USIM.

17. Procédé selon la revendication 16, **caractérisé en ce que** l'application est une application SAT ou USAT.

18. Procédé selon l'une quelconque des revendications 13-17, **caractérisé en ce que** les données associées à une identité d'abonné comprennent le numéro de téléphone d'abonné.

19. Procédé selon l'une quelconque des revendications 13-18, **caractérisé en ce qu'**il comprend les étapes de :
- générer le code graphique à partir de données stockées dans une mémoire ; et
- montrer le code graphique généré sur l'afficheur.

20. Procédé selon l'une quelconque des revendications 13-18, **caractérisé en ce qu'**il comprend les étapes de:
- générer le code graphique à partir des données introduites à travers un clavier de terminal ; et
- montrer le code graphique généré sur l'afficheur.

21. Procédé selon l'une quelconque des revendications 13-20, **caractérisé en ce qu'**il comprend les étapes de:
- stocker le code graphique dans une mémoire ; et
- montrer le code graphique sur l'afficheur.

22. Procédé selon l'une quelconque des revendications 13-21, **caractérisé en ce qu'**il comprend, en outre, la première étape de :
- demander l'affichage d'un code à barres correspondant à, au moins, une donnée associée à un abonné.

23. Procédé selon l'une quelconque des revendications 13-22, **caractérisé en ce que** l'étape de montrer le code sur l'afficheur inclut l'envoi de, au moins, une commande proactive qui supporte des icônes.

24. Systèmes pour des transactions comprenant des moyens de traitement de données, au moins un dispositif de lecture de code graphique pour lire optiquement un code graphique et au moins un équipement d'abonné de téléphonie mobile, **caractérisé en ce que** l'équipement d'abonné est un équipement d'abonné selon l'une quelconque des revendications 1-12.
